# EUROPEAN PATENT SPECIFICATION

(11) **EP 3 820 726 B1**
(45) Date of publication and mention of the grant of the patent: **05.10.2022**
(21) Application number: 18766036.0
(22) Date of filing: 13.07.2018
(51) Int. Cl.: B60K 35/00

(54) **OPTICAL FLOW FOR MOTION SICKNESS REDUCTION**
OPTISCHER FLUSS ZUR VERMINDERUNG VON REISEKRANKHEIT
FLUX OPTIQUE POUR RÉDUCTION DU MAL DES TRANSPORTS

(30) Priority: 10.07.2018 PT 2018110832
(43) Date of publication of application: 19.05.2021
(73) Proprietor: Bosch Car Multimedia Portugal, S.A., 4705-820 Braga (PT)
(72) Inventor: AGUIAR RIBEIRO, Nuno Miguel, 4730-244 Lage (PT); CASTRO VILAS BOAS, Vera Patrícia, 4760-767 V .N. Famalicão (PT); DUARTE DIAS, Sérgio Jesus, 4700-277 Braga (PT); GOMES FERREIRA, João Pedro, 4705-156 Braga (PT); VILLAMARIZ DO NASCIMENTO, Rafael, 2790-420 Queijas (PT)
(74) Representative: Ferreira, Maria Silvina
(86) International application number: PCT/IB2018/055194
(87) International publication number: WO 2020/012227

(56) References cited:
- EP-A1- 2 228 089
- WO-A1-2013/055513
- WO-A1-2016/107674
- WO-A2-2017/195200

## Description

### Technical field

This invention relates to a method and respective system for motion sickness reduction based on optical flow.

### Background art

The trend to transform cars in moving offices and entertainment centers poses new challenges to counteract the unpleasant effect of motion sickness symptoms. In fact, when interacting with other devices, such as infotainment devices, within the car, the passenger will likely have their visual field stabilized with few, if any, vection inputs from the outside, i.e. the passengers' eyes will be, for most of time, focused on stationary visual events inside the car. Therefore, visual-vestibular incongruences will tend to be created causing motion sickness symptoms to appear.

A couple of solutions to cope with motion sickness in autonomous vehicles are already known from the state of the art. Document WO 2008033540A2 describes a motion sickness reduction device, including an image capture device for capturing an image of a device environment and an image display device for displaying an image related to the captured image. In order to effectively prevent or reduce motion sickness, the right amount of motion is displayed on the image display device when the vehicle accelerates or turns. Various methods are also disclosed for adjusting the image on the display device and/or the angle of the environment subtended to make the motion sickness reduction device effective.

Another example is the document WO 2005053991A1, disclosing a method and system for supporting path control. Said path control is especially provided by conducting at least one of the following steps: a) estimating an actual future path of the vehicle on the basis of vehicle movement data and optically and/or acoustically and/or tactilely indicating the estimated actual future path to the driver, b) detecting the actual present path of the vehicle, estimating a present deviation of the detected actual present path from a desired present path and optically and/or acoustically and/or tactilely indicating the estimated present deviation to the driver.

WO2016107674A1 discloses a method for producing abstract reproductions of the surroundings of a vehicle, which involves producing the abstract reproductions on display screens arranged in the front, sides, and rear of the vehicle. The abstract reproductions can move around and among the display screens based on movement of the vehicle relative to its surroundings or movement of the surroundings relative to the vehicle.

### Summary

The present invention describes a method according to claim 12 for reducing motion sickness symptoms, experienced by an occupant of a vehicle. Said method comprising the following steps:
- Obtaining vehicle's motion data;
- Obtaining occupant's data;
- Computing visual information surrounding the vehicle for its immediate and future position, based on the vehicle's motion data collected;
- Generating motion cues based on the visual information computed on previous step and the occupant's data collected;
- Displaying the generated motion cues within peripheral visual field of the occupant.

In one embodiment of the method, the vehicle's motion data is related to vehicle dynamics and its outer vicinity, comprising inertial measurement data, wheel-speed data, steering-angle data, vision cameras data, radar sensors data and data retrieved from driving assistance systems and/or automated driving systems of the vehicle.

According to the invention, the occupant's data is related to occupant's position within the vehicle's functional surfaces in relation to the outer environment.

According to the invention, the occupant's data is related to head position data.

Yet in another embodiment of the method, the occupant's data is related to eye position data.

In another embodiment of the method, the motion cues are provided in the form of two dimensional flow of optical signals.

In another embodiment of the method, the motion cues are provided in the form of three dimensional flow of optical signals.

In another embodiment of the method, motion cues are optical flows of patterns of light moving according the external context of the vehicle, representing immersive visualization in a low fidelity model.

Yet in another embodiment of the method, motion cues are natural patterns wherein light pattern intensity and density evolves along time following a bell shaped pattern.

The present invention also describes a system according to claim 1 for reducing motion sickness symptoms experienced by an occupant of a vehicle. Said system comprising a vehicle motion data unit, an occupant data unit and a processing unit, wherein the vehicle motion data unit, the occupant data unit and the processing unit are configured to execute the previous method in order to display motion cues in a vehicle's functional surfaces, disposed within the peripheral visual field of the occupant.

In one embodiment of the system, the vehicle's functional surfaces are a dashboard, a-pillars, door panels and vehicle's floor.

In one embodiment of the system, it comprises a light projector configured to project the motion cues into the vehicle's functional surfaces.

In another embodiment of the system, the vehicle's functional surfaces comprises embedded LED or optical fibers within its surfaces.

Finally in another embodiment of the system, the vehicle's functional surfaces are made of flexible displays.

### General Description

The present technology intends to solve the problem associated to motion sickness symptoms experienced by an occupant of a vehicle. In the context of this description an occupant is a driver or a passenger of the vehicle.

According to principles described herein, it is implemented a method to reduce occupant's motion sickness symptoms by providing him visual complementary information, via artificial enhancements, of the actual visual scene surrounding the vehicle. Said artificial enhancements are related to vehicle's functional surfaces disposed within peripheral visual field of the occupant, such as dashboards, a-pillars, door panels or vehicle's floor.

To generate visual complementary information to an occupant, the method now developed correlates data coming from two different agents: the vehicle itself and its surrounding context, and the occupant. Both are continuous monitored in order to create motion cues that are presented to the occupant under the form of optical flow, according to road topography and vehicle movement.

In what concerns to vehicle motion data, it is related to vehicle dynamics and its outer vicinity, defining its behavior while driving. Said parameters are collected by a set of sensorial units which may already exist in the vehicle, such as inertial measurement unit, wheel-speed sensor, steering-angle sensor, vision cameras, radar sensors, driving assistance systems and/or automated driving systems. The occupant data is related to sensorial information used to retrieve the position of the occupant, in particular his head and/or eye position data, within the vehicle's functional surfaces in relation to the outer environment. The sensors used in this regard may already exist in the vehicle.

The method now developed uses inputs from vehicle motion data to compute visual information surrounding the vehicle for its immediate and future position. Combined with the sensorial data from an occupant, the method computes and defines an adequate motion flow as it will be perceived by the occupant, as if the vehicle would be transparent and the occupant could see through it. The motion cues generated represent immersive visualization of surroundings of the vehicle in a low fidelity model, i.e. optical flow of patterns of light moving according the external context of the vehicle. Said motion cues are provided in the form of two- or three dimensional flow of optical signals based on perceptual characteristics such as pattern type and lighting intensity and density, and are displayed in vehicle's functional surfaces in the form of, for example, embedded LEDs or optical fibers, light projections or flexible displays. These turn the surfaces of the vehicle which typically do not perform any activity into functional surfaces which display the generated information.

The motion cues can be transmitted through light using bio-inspired behavior: light pattern intensity and density evolves along time following a bell shaped patters similar to biological motion, shoal motion or bioluminescent light. The familiarity with these natural patterns and the redundancy of signal dimensions increase the signal perception impact in the immersivity with the environment.

The method now developed may be executed within an existing processing unit inside the electronic control unit of a vehicle, or can be implemented through a dedicated electronic control unit, to compute, control and perform the visual flow output.

### Brief description of drawings

For easier understanding of this invention, figures are attached in the annex that represent forms of implementation which nevertheless are not intended to limit the technique disclosed herein.
**Figure 1** illustrates a conceptual block diagram illustrating the components for calculating and presenting motions cues, where the reference signs represent:
   1 - vehicle motion data unit;
   2 - occupant data unit;
   3 - processing unit;
   4 - vehicle's functional surfaces.
**Figure 2** illustrates motion cues displayed in vehicle's functional surfaces displaying the surroundings of the vehicle in a low fidelity model, where the reference signs represent:
   4 - vehicle's functional surfaces;
   5 - motion cues;
   6 - occupant.
**Figure 3** illustrates motion cues based on natural patterns displayed in vehicle's functional surfaces, where the reference signs represent:
   4 - vehicle's functional surfaces;
   5 - motion cues;
   6 - occupant.

### Description of the embodiments

Now, embodiments of the present invention will be described in detail with reference to the annexed drawings. However, they are not intended to limit the scope of this invention.

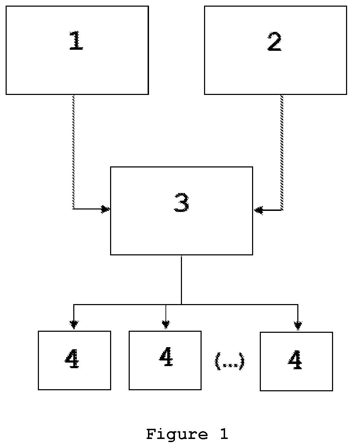

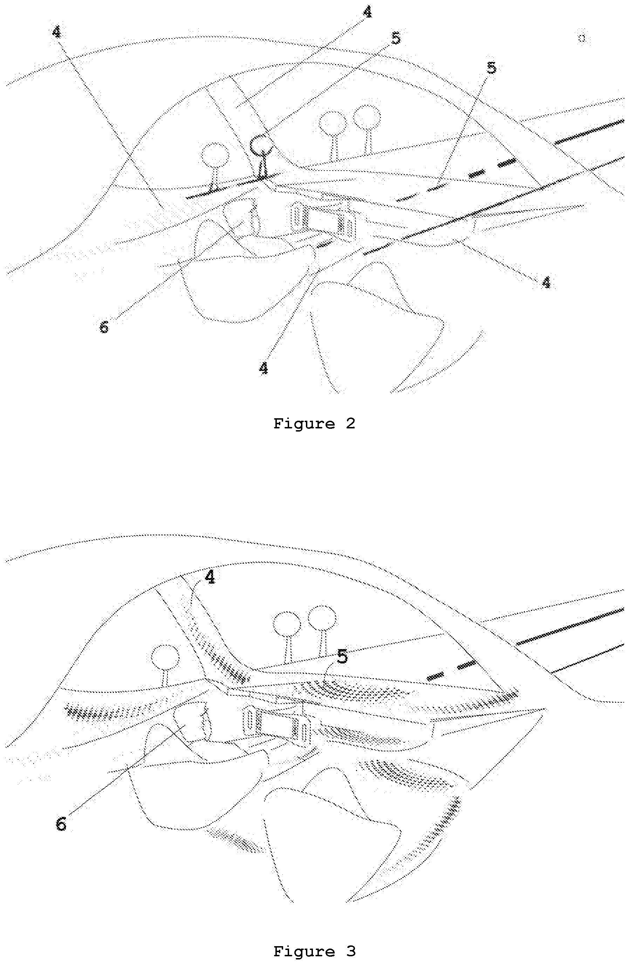

Figure 1 shows a block diagram of components of an embodiment for calculating and presenting motion cues. A first component, vehicle motion data unit (1), is provided for retrieving vehicle motion data related to vehicle dynamics and its outer vicinity. Said parameters are collected by a set of sensorial units, which may already exist in the vehicle, like for example, inertial measurement unit, wheel-speed sensor, steering-angle sensor, vision cameras, radar sensors, driving assistance systems and/or automated driving systems. Retrieving data from the intended motion of the vehicle, i.e which actions will the automated driving system perform on the dynamic driving task during driving, anticipating the behavior of the vehicle, and thus, being able to anticipate its future position relatively to the environment where the vehicle is located. This allows the processing unit (3) to compute the virtual scene based on past and predicted. A second component, occupant data unit (2), is provided for retrieving occupant data related to head and/or eye position data, as well as assess the occupant condition to monitor for motion sickness symptoms. On the basis of the vehicle motion data and the occupant data, a third component, processing unit (3), is provided for calculating motion cues (5), representing visual complementary information to be presented to the occupant (6) by means of a fourth component, vehicle's functional surfaces (4). Figure 2 illustrates an embodiment where functional surfaces (4) display motion cues (5) representing immersive visualization of surroundings of the vehicle in a low fidelity model, i.e. optical flow of patterns of light moving according the external context of the vehicle. In another embodiment, as illustrated in figure 3, functional surfaces (4) display motion cues (5) representing the movement of the vehicle based on natural patterns, where light pattern intensity and density evolves along time following a bell shaped patters similar to biological motion, shoal motion or bioluminescent light. In another embodiment, the vehicle's functional surfaces (4) display the surroundings of the vehicle in a low fidelity model.

In one embodiment, the processing unit (3) is part of the electronic control unit of a vehicle as well as the vehicle motion data unit (1) and occupant data unit (2). The functional surfaces (4) are disposed within peripheral visual field of the occupant (6) and are related to the dashboard, a-pillars, door panels or vehicle's floor.

In another embodiment, the method is implemented in a dedicated electronic control unit, to be installed in a vehicle, comprising means for providing vehicle motion data and occupant data information, and configured to compute, control and perform the output visual flow.

In one embodiment, the motion cues are displayed in the vehicle's functional surfaces (4) through embedded LEDs or optical fibers within the surfaces. In another embodiment, the motion cues (5) are projected in said functional surfaces (4). Yet in another embodiment, the functional surfaces (4) are made of flexible displays.

## Claims

1. System for reducing motion sickness symptoms experienced by an occupant (6) of a vehicle, comprising
a vehicle motion data unit (1), adapted to retrieve vehicle motion data;
an occupant data unit (2), adapted to retrieve occupant data; and
a processing unit (3), configured to compute visual information surrounding the vehicle for its immediate and future position, based on the vehicle motion data and to calculate motion cues (5) based on the visual information and the occupant data;
wherein the system is configured to display the calculated motion cues (5) in functional surfaces (4) of the vehicle disposed within a peripheral visual field of the occupant (6),
**characterized in that**
the occupant data comprises the head position of the occupant (6) within the functional surfaces (4) of the vehicle in relation to an outer environment.

2. System according to claim 1, wherein the functional surfaces (4) of the vehicle are a dashboard, a-pillars, door panels and vehicle's floor.

3. System according to claim 1, further comprising a light projector configured to project the motion cues (5) into the functional surfaces (4) of the vehicle.

4. System according to claim 1, wherein the functional surfaces (4) of the vehicle comprises embedded LED or optical fibers.

5. System according to claim 1, wherein the functional surfaces (4) of the vehicle comprise flexible displays.

6. System according to claim 1, wherein the vehicle motion data is retrieved by a set of sensorial units comprising inertial measurement unit, wheel-speed sensor, steering-angle sensor, vision cameras, radar sensors, driving assistance systems and/or automated driving systems.

7. System according to claim 1, wherein the motion cues (5) represent immersive visualization of surroundings of the vehicle.

8. System according to claim 1, wherein the motion cues (5) comprise two-dimensional flow of optical signals.

9. System according to claim 1, wherein the motion cues (5) comprise three-dimensional flow of optical signals.

10. System according to claim 1, wherein the motion cues (5) comprise optical flow patterns of light moving according to an external context of the vehicle and representing immersive visualization.

11. System according to claim 1, wherein the motion cues (5) comprise natural light patterns adapted to evolve intensity and density along time through a bell-shaped pattern.

12. Operating method of the system according to one of the claims 1 to11 comprising the steps of:
Retrieving the vehicle motion data;
Retrieving the occupant data;
Calculating motion cues (5) based on the vehicle motion data and the occupant data;
Displaying the generated motion cues (5) within the peripheral visual field of the occupant (6) through the functional surfaces (4) of the vehicle.

## Patentansprüche

1. System zur Verminderung von Reisekrankheitssymptomen, welche einem Insassen (6) eines Fahrzeugs befallen, bestehend aus
einer Fahrzeugbewegungsdateneinheit (1), welche dazu geeignet ist, Fahrzeugbewegungsdaten abzurufen;
einer Insassendateneinheit (2), welche dazu geeignet ist, Insassendaten abzurufen; sowie
einer Verarbeitungseinheit (3), die dazu ausgelegt ist, visuelle Daten auszuwerten bezüglich des Fahrzeugumfelds zur Berechnung seiner unmittelbaren und zukünftigen Position auf der Grundlage der Fahrzeugbewegungsdaten und zur Berechnung von Bewegungshinweisen (5) basierend auf den visuellen Information, sowie auf den Insassendaten;
wobei das System ausgelegt ist, die berechneten Bewegungshinweise (5) in Funktionsflächen (4) des Fahrzeugs anzuzeigen, die in einem peripheren Gesichtsfeld des Insassen (6) angeordnet sind,
**dadurch gekennzeichnet, dass**
die Insassendaten die Kopfposition des Insassen (6) innerhalb der Funktionsflächen (4) des Fahrzeugs im Verhältnis zu einer äußeren Umgebung umfassen.

2. System nach Anspruch 1, wobei die Funktionsflächen (4) des Fahrzeugs ein Armaturenbrett, A-Säulen, Türverkleidungen und den Fahrzeugboden sind.

3. System nach Anspruch 1, welches ferner einen Lichtprojektor, der dazu ausgelegt ist, die Bewegungshinweise (5) auf die Funktionsflächen (4) des Fahrzeugs zu projizieren, umfasst.

4. System nach Anspruch 1, wobei die Funktionsflächen (4) des Fahrzeugs eingebettete LEDs oder optische Fasern umfassen.

5. System nach Anspruch 1, wobei die Funktionsflächen (4) des Fahrzeugs flexible Anzeigen umfassen.

6. System nach Anspruch 1, wobei die Fahrzeugbewegungsdaten von einem Satz von Sensoreinheiten abgerufen werden, die eine Trägheitsmesseinheit, einen Raddrehzahlsensor, einen Lenkwinkelsensor, Sichtkameras, Radarsensoren, Fahrerassistenzsysteme und/oder automatisierte Fahrsysteme umfassen.

7. System nach Anspruch 1, wobei die Bewegungshinweise (5) eine immersive Visualisierung des Fahrzeugumfelds darstellen.

8. System nach Anspruch 1, wobei die Bewegungshinweise (5) einen bidimensionalen Fluss optischer Signale umfassen.

9. System nach Anspruch 1, wobei die Bewegungshinweise (5) einen dreidimensionalen Fluss optischer Signale umfassen.

10. System nach Anspruch 1, wobei die Bewegungshinweise (5) optische Lichtflussmuster umfassen, die sich gemäß einem externen Kontext des Fahrzeugs bewegen und eine immersive Visualisierung darstellen.

11. System nach Anspruch 1, wobei die Bewegungshinweise (5) aus natürlichen Lichtmustern bestehen, die ausgelegt sind, im Laufe der Zeit anhand eines glockenförmigen Musters Intensität und Dichte zu entwickeln.

12. Betriebsverfahren des Systems, nach einem der Ansprüche 1 bis 11, welches die folgenden Schritte umfasst:
Abrufen der Fahrzeugbewegungsdaten;
Abrufen der Insassendaten;
Die Berechnung von Bewegungshinweisen (5) auf der Grundlage der Fahrzeugbewegungs- und Insassendaten;
Anzeigen der erzeugten Bewegungshinweise (5) im peripheren Gesichtsfeld des Insassen (6) anhand der Funktionsflächen (4) des Fahrzeugs.

## Revendications

1. Système pour la réduction des symptômes du mal des transports subis par un occupant (6) d'un véhicule, comprenant
une unité de données de mouvement de véhicule (1), adaptée pour récupérer des données de mouvement de véhicule ;
une unité de données d'occupant (2), adaptée pour récupérer des données d'occupant ; et
une unité de traitement (3), configurée pour calculer des informations visuelles des alentours du véhicule pour sa position immédiate et future, sur base des données de mouvement du véhicule et pour calculer des marques
de mouvement (5) sur base des informations visuelles et des données d'occupant ;
dans lequel le système est configuré pour afficher les marques de mouvement calculées (5) dans des surfaces fonctionnelles (4) du véhicule disposé à l'intérieur d'un champ visuel périphérique de l'occupant (6), **caractérisé en ce que**
les données
d'occupant comprennent la position de la tête de l'occupant (6) à l'intérieur des surfaces fonctionnelles (4) du véhicule par rapport à un environnement externe.

2. Système selon la revendication 1, dans lequel les surfaces fonctionnelles (4) du véhicule sont une planche de bord, des montants avant, des panneaux de porte et le plancher du véhicule.

3. Système selon la revendication 1, comprenant en outre un projecteur lumineux configuré pour projeter les marques de mouvement (5) dans les surfaces fonctionnelles (4) du véhicule.

4. Système selon la revendication 1, dans lequel les surfaces fonctionnelles (4) du véhicule comprennent des LED ou des fibres optiques intégrées.

5. Système selon la revendication 1, dans lequel les surfaces fonctionnelles (4) du véhicule comprennent des écrans flexibles.

6. Système selon la revendication 1, dans lequel les données de mouvement de véhicule sont récupérées par un ensemble d'unités sensorielles comprenant une unité de mesure inertielle, un capteur de vitesse de roue, un capteur d'angle de braquage, des caméras de vision, des capteurs radar, des systèmes d'assistance à la conduite et/ou des systèmes de conduite automatisée.

7. Système selon la revendication 1, dans lequel les marques de mouvement (5) représentent une visualisation immersive des alentours du véhicule.

8. Système selon la revendication 1, dans lequel les marques de mouvement (5) comprennent un flux bidimensionnel de signaux optiques.

9. Système selon la revendication 1, dans lequel les marques de mouvement (5) comprennent un flux tridimensionnel de signaux optiques.

10. Système selon la revendication 1, dans lequel les marques de mouvement (5) comprennent des motifs de flux optiques de lumière se déplaçant selon un contexte extérieur au véhicule et représentant une visualisation immersive.

11. Système selon la revendication 1, dans lequel les marques de mouvement (5) comprennent des motifs de lumière naturelle adaptés pour évoluer en intensité et en densité au cours du temps à travers un motif en forme de cloche.

12. Procédés d'utilisation du système selon l'une quelconque des revendications 1 à 11, comprenant les étapes de :
la récupération des données de mouvement de véhicule ;
la récupération des données d'occupant ;
le calcul des marques de mouvement (5) sur base des données de mouvement de véhicule et des données d'occupant ;
l'affichage des marques de mouvement générées (5) à l'intérieur du champ visuel périphérique de l'occupant (6) à travers les surfaces fonctionnelles (4) du véhicule.
